(19) **Europäisches Patentamt**
**European Patent Office**
**Office européen des brevets**

(11) **EP 4 074 415 A1**

(12) **EUROPEAN PATENT APPLICATION**

(43) Date of publication:
**19.10.2022 Bulletin 2022/42**

(21) Application number: **21168990.6**

(22) Date of filing: **16.04.2021**

(51) International Patent Classification (IPC):
*B01J 21/04* (2006.01)   *B01J 21/06* (2006.01)
*B01J 23/89* (2006.01)   *B01J 23/656* (2006.01)
*B01J 35/00* (2006.01)   *B01J 35/04* (2006.01)
*B01J 35/02* (2006.01)   *B01J 37/02* (2006.01)
*B01J 37/03* (2006.01)   *B01D 53/94* (2006.01)

(52) Cooperative Patent Classification (CPC):
**B01J 21/04; B01D 53/944; B01J 21/066;**
**B01J 23/6562; B01J 23/8913; B01J 23/892;**
**B01J 23/8926; B01J 35/0013; B01J 35/023;**
**B01J 35/04; B01J 37/0211; B01J 37/03;**
B01D 2255/1021; B01D 2255/2063;
B01D 2255/20715;                          (Cont.)

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicants:
• **BASF CORPORATION**
  **Florham Park, NJ 07932 (US)**

• **Stanford University**
  **Stanford, California 94305 (US)**

(72) Inventor: **The designation of the inventor has not yet been filed**

(74) Representative: **Finnegan Europe LLP**
  **1 London Bridge**
  **London SE1 9BG (GB)**

(54) **NOVEL NANOPARTICLE ALLOYS AND CATALYTIC COMPOSITIONS COMPRISING THE SAME FOR EMISSION CONTROLS**

(57)    Nanoparticles comprising a platinum group metal and a base metal, catalytic compositions comprising such nanoparticles and a support material, and methods of making such nanoparticles and catalytic compositions are disclosed. Catalytic articles and exhaust gas treatment systems, as well as methods of treating an exhaust gas stream comprising a pollutant using these catalytic articles and exhaust gas treatment systems, are also disclosed.

EP 4 074 415 A1

(52) Cooperative Patent Classification (CPC): (Cont.)
B01D 2255/2073; B01D 2255/20746;
B01D 2255/20753; B01D 2255/20761;
B01D 2255/2092; B01D 2255/9202

**Description**

Disclosed herein are nanoparticles comprising a platinum group metal (PGM) and a base metal (BM), catalytic compositions comprising such nanoparticles and a support material, and methods of making such nanoparticles and catalytic compositions. Catalytic articles and exhaust gas treatment systems, as well as methods of treating an exhaust gas stream comprising a pollutant, are also disclosed. Regulators worldwide are imposing increasingly stringent vehicle emission limits. Lean burn engines, e.g., diesel engines, provide vehicle users with excellent fuel economy due to their standard operation at high air/fuel ratios under fuel lean conditions. However, these engines also emit exhaust gas emissions comprising pollutants such as particulate matter (PM), unburned hydrocarbons (HC), carbon monoxide (CO), and nitrogen oxides ($NO_x$).

Platinum group metals (PGMs) are among the most active catalyst components used in automotive emission control systems to reduce the release of pollutants. However, high-temperature exposure during operation can significantly diminish the activity of PGM catalysts due to metal particle sintering, which reduces the catalyst's specific surface area and lowers catalytic efficiency. The commonly employed PGM platinum (Pt) is especially vulnerable under high-temperature and lean (oxidizing) conditions. For example, a PGM dispersion (fraction of metal exposed) on a three-way catalyst (TWC) may be reduced to less than 5% after typical gasoline-type aging, yielding inefficient PGM utilization, increased costs, and higher noxious emissions.

Emissions control during the engine cold start period has become increasingly important as regulations become more stringent. Many catalysts used to treat the exhaust of internal combustion engines are less effective during periods of relatively low temperature operation because the engine exhaust is not at a sufficiently high temperature for efficient catalytic conversion of noxious components. Illustratively, the intrinsic activities of even state-of-the-art PGM catalysts are still too low to be effective at the low exhaust temperatures used, for example, during engine cold start, resulting in increased emissions during low temperature operation.

Accordingly, there is a need for novel catalytic compositions with enhanced PGM efficiency at low temperatures.

Disclosed herein is a nanoparticle comprising a platinum group metal (PGM) and a base metal (BM), wherein:

a molar percentage of the PGM is in the range of 25% to 95%, based on a total number of moles of the PGM and the BM;
the nanoparticle comprises an alloy of the PGM and the BM; and
the nanoparticle has a particle size in the range of 1 nm to 4 nm.

In some embodiments, the PGM is selected from Pd, Pt, and combinations of the foregoing. In some embodiments, the PGM is Pt.

In some embodiments, the BM is selected from Cu, Co, Mn, Ni, and combinations of any of the foregoing. In some embodiments, the BM is Cu. In some embodiments, the BM is Co. In some embodiments, the BM is Mn. In some embodiments, the BM is Ni.

In some embodiments, the alloy comprises at least 2 at% of the BM.

In some embodiments, the molar percentage of the PGM is in the range of 25% to 75%. In some embodiments, the molar percentage of the PGM is in the range of 25% to 67%. In some embodiments, the molar percentage of the PGM is in the range of 25% to 65%. In some embodiments, the molar percentage of the PGM is in the range of 33% to 65%.

In some embodiments, the particle size is in the range of 2.5 nm to 3.5 nm.

In some embodiments, the nanoparticle consists essentially of the PGM and the BM.

Also disclosed herein is a nanoparticle comprising a platinum group metal (PGM) and a base metal (BM), wherein:

a molar percentage of the PGM is in the range of 50% to 95%, calculated based on a total number of moles of the PGM and the BM;
the nanoparticle comprises an alloy of the PGM and the BM; and
the nanoparticle has a particle size in the range of 4 nm to 7 nm.

In some embodiments, the PGM is selected from Pd, Pt, and combinations of the foregoing. In some embodiments, the PGM is Pt.

In some embodiments, the BM is selected from Cu, Co, Mn, Ni, and combinations of any of the foregoing. In some embodiments, the BM is Cu. In some embodiments, the BM is Co. In some embodiments, the BM is Mn. In some embodiments, the BM is Ni.

In some embodiments, the alloy comprises at least 2 at% of the BM.

In some embodiments, the molar percentage of the PGM is in the range of 60% to 95%. In some embodiments, the molar percentage of the PGM is in the range of 65% to 90%. In some embodiments, the molar percentage of the PGM is in the range of 67% to 88%.

In some embodiments, the particle size is in the range of 4 nm to 6 nm.

In some embodiments, the nanoparticle consists essentially of the PGM and the BM. Also disclosed herein is a nanoparticle prepared by a process comprising:

dispersing seeds of a platinum group metal (PGM) in an organic solvent to produce a first mixture;
adding a base metal (BM) precursor to the first mixture to produce a second mixture;
adding a coordinating solvent to the second mixture to produce a third mixture;
rapidly heating the third mixture to a high temperature;
holding the third mixture at the high temperature for a time period;
rapidly cooling the mixture to room temperature; and
isolating the nanoparticle.

Also disclosed herein is a catalytic composition comprising:

a nanoparticle disclosed herein; and
a support material.

In some embodiments, the support material comprises alumina, silica, zirconia, titania, ceria, or a combination of any of the foregoing. In some embodiments, the support material is $Al_2O_3$. In some embodiments, the support material is lanthanum-stabilized zirconia. In some embodiments, the support material does not substantially change the electronic structure of the at least one nanoparticle. In some embodiments, the nanoparticle comprises 0.2 wt% to 0.4 wt% of a total weight of the catalytic composition.

In some embodiments, the catalytic composition has an exposed metal surface area in the range of 0.01 $m^2/g_{catalyst}$ to 0.1 $m^2/g_{catalyst}$.

Also disclosed herein is a catalytic composition prepared by a process comprising:

dispersing a nanoparticle disclosed herein in a first organic solvent to produce a first dispersion;
dispersing a support material in a second organic solvent to produce a second dispersion;
adding a portion of the first dispersion to the second dispersion to produce a mixture;
stirring the mixture for a time period; and
isolating the catalytic composition.

Also disclosed herein is a catalytic article comprising:

a substrate having an inlet end and an outlet end defining an overall length; and
a catalytic coating comprising a washcoat disposed on at least a portion of the overall length of the substrate, wherein the washcoat comprises a catalyst composition disclosed herein. Also disclosed herein is an exhaust gas treatment system comprising a catalytic article disclosed herein, wherein the catalytic article is downstream of and in fluid communication with an internal combustion engine.

Also disclosed herein is a method of treating an exhaust gas stream comprising a pollutant, the method comprising passing the exhaust gas stream through a catalytic article disclosed herein or an exhaust gas treatment system disclosed herein.

In some embodiments, the pollutant comprises hydrocarbons.

In some embodiments, the exhaust gas stream is passed through the catalytic article or the exhaust gas treatment system at a low temperature. In some embodiments, the low temperature is in the range of 100°C to 150°C.

## BRIEF DESCRIPTION OF THE DRAWINGS

FIGs. 1A-E depict representative transmission electron microscopy (TEM) images of approximately 2 nm Pt **(FIG. 1A),** Pt/Co **(FIG. 1B),** Pt/Mn **(FIG. 1C),** Pt/Ni **(FIG. 1D)**, and Pt/Cu **(FIG. IE)** nanoparticles, while **FIG. IF** shows the particle size distributions of the Pt and bimetallic Pt/M nanoparticles.

FIGs. 2A-D depict representative TEM images and particle size distributions for approximately 5 nm Pt, $Pt_{86}Cu_{14}$ ("low Cu"), $Pt_{69}Cu_{31}$ ("med Cu"), and $Pt_{44}Cu_{56}$ ("high Cu") nanoparticles.

FIGs. 3A-D depict representative TEM images for approximately 2 nm Pt, $Pt_{63}Cu_{37}$ ("low Cu"), $Pt_{49}Cu_{51}$ ("med Cu"), and $Pt_{37}Cu_{63}$ ("high Cu") nanoparticles. **FIGs. 3E-H** depict representative TEM images for approximately 5 nm Pt,

Pt$_{86}$Cu$_{14}$ ("low Cu"), Pt$_{69}$Cu$_{31}$ ("med Cu"), and Pt$_{44}$Cu$_{56}$ ("high Cu") nanoparticles.

**FIGs. 4A-D** depict representative TEM and energy-dispersive X-ray spectroscopy (EDS) images for approximately 5 nm Pt, Pt$_{86}$Cu$_{14}$ ("low Cu"), Pt$_{69}$Cu$_{31}$ ("med Cu"), and Pt$_{44}$Cu$_{56}$ ("high Cu") nanoparticles.

**FIG. 5** depicts representative X-ray diffraction (XRD) spectra for approximately 2 nm Pt and bimetallic Pt/M nanoparticles, where M is Ni, Mn, Co, or Cu.

**FIGs. 6A,B** depict representative TEM images for approximately 2 nm Pt$_{49}$Cu$_{51}$ nanoparticles supported on Al$_2$O$_3$ or lanthanum-stabilized zirconia (LSZ), respectively. **FIG. 6C** shows kinetics measurements for approximately 2 nm Pt$_{63}$Cu$_{37}$, Pt$_{49}$Cu$_{51}$, and Pt$_{37}$Cu$_{63}$ NPs supported on Al$_2$O$_3$ or LSZ.

**FIGs. 7A-D** depict catalytic test results-light-off curves **(FIG. 7A)**, kinetics measurements **(FIG. 7B)**, activation energies **(FIG. 7C)**, and turnover frequencies **(FIG. 7D)**- for approximately 2 nm monolithic Pt and bimetallic Pt/M nanoparticles supported on Al$_2$O$_3$.

**FIG. 8** depicts propene conversion as a function of reaction temperature for approximately 5 nm PtCu nanoparticles and Pt and Cu reference samples (5 nm).

**FIGs. 9A,B** depict kinetics measurements for approximately 2 nm Pt/Cu nanoparticles supported on Al$_2$O$_3$ and approximately 5 nm Pt/Cu nanoparticles supported on Al$_2$O$_3$, respectively. **FIGs. 9C, D** depict turnover frequencies (TOFs) on approximately 2 nm Pt/Cu nanoparticles supported on Al$_2$O$_3$ and approximately 5 nm Pt/Cu nanoparticles supported on Al$_2$O$_3$, respectively.

**FIGs. 10A,B** depict representative TEM images of Pd and PdCu nanoparticles, respectively, while

**FIG. 10C** shows the particle size distribution of the Pd and PdCu nanoparticles. **FIGs. 10D,E** depict kinetics measurements and activation energies, respectively, for Al$_2$O$_3$ supported monolithic Pd and bimetallic Pd/Cu nanoparticles, as well as monolithic Pt and bimetallic Pt/Cu nanoparticles.

**Definitions:**

As used herein, "a" or "an" entity refers to one or more of that entity, e.g., "a compound" refers to one or more compounds or at least one compound unless stated otherwise. As such, the terms "a" (or "an"), "one or more", and "at least one" are used interchangeably herein.

As used herein, "[X] is in the range of [A] to [Z]" means that [X] can be any value in the range from [A] to [Z], including [A] or [Z].

As used herein, the term "alloy" refers to a metal created by combining two or more metallic elements. As used herein "a molar percentage of [X] calculated based on a total number of moles of [X] and [Y]," e.g., in the context of a nanoparticle refers to a percentage calculated as:

$$\frac{moles\ of\ [X]}{(moles\ of\ [X]) + (moles\ of\ [Y])} \times 100\%$$

As used herein, the term "associated" means, i.e., "equipped with," "connected to," or in "communication with," e.g., "electrically connected" or in "fluid communication with" or otherwise connected in a way to perform a function. As used herein, the term "associated" may mean directly associated with or indirectly associated with, i.e., through one or more other articles or elements. As used herein, the term "average particle size" refers to a characteristic of particles that indicates, on average, the diameter of the particles.

As used herein, the term "base metal" refers to a transition metal or lanthanide (e.g., V, Mn, Fe, Co, Ni, Cu, Zn, Ag, Au, or Sn) or an oxide thereof. For ease of reference herein, concentrations of base metal or base metal oxide materials are reported in terms of elemental metal concentration rather than the oxide form. In some embodiments, the base metal may be selected from iron (Fe), copper (Cu), manganese (Mn), chromium (Cr), cobalt (Co), nickel (Ni), tin (Sn), an oxide of any of the foregoing, and mixtures of any of the foregoing.

As used herein, the term "calcination" refers to heating a solid to an elevated temperature (i.e., an above-ambient temperature) in air or oxygen, such as, e.g., to remove impurities or volatile substances from the solid, or to fix one substance onto another.

As used herein, the term "catalyst" or "catalyst composition" refers to a material that promotes a chemical reaction. The catalyst or catalyst composition may include a catalytically active species and a support that carries or supports the catalytically active species. For example, the catalytically active species may be disposed in or on a support material through association, dispersion, impregnation, or other suitable methods, and may reside on the surface or be distributed throughout the support material. As used herein, the term "catalytic article" refers to an article comprising a substrate having a catalyst coating composition.

As used herein, the term "coordinating solvent" refers to a solvent capable of coordinating with dissolved ions. Non-limiting examples of coordinating solvents include dimethylsulfoxide (DMSO), dimethylformamide (DMF), ace-

tonitrile ($CH_3CN$), nitromethane ($CH_3NO_2$), and nitrobenzene ($C_6H_5NO_2$).

As used herein, the term "exhaust stream" or "exhaust gas stream" refers to any combination of flowing gas that may contain solid or liquid particulate matter. The stream may comprise gaseous components, such as, for example, exhaust of a lean burn engine, which may contain certain non-gaseous components, such as liquid droplets, solid particulates, and the like. The exhaust gas stream of a combustion engine may further comprise combustion products ($CO_2$ and $H_2O$), products of incomplete combustion (carbon monoxide (CO) and hydrocarbons (HC)), oxides of nitrogen ($NO_x$), combustible and/or carbonaceous particulate matter (soot), and/or unreacted oxygen and nitrogen.

As used herein, the terms "upstream" and "downstream" refer to relative directions according to the flow of an engine exhaust gas stream from an engine toward a tailpipe, with the engine in an upstream location and the tailpipe and any pollution abatement articles, such as, e.g., filters and catalysts, being downstream from the engine. The inlet end of a substrate is synonymous with the "upstream" end or "front" end. The outlet end is synonymous with the "downstream" end or "rear" end. An upstream zone is upstream of a downstream zone. In some embodiments, an upstream zone may be closer to the engine or manifold, and a downstream zone may be further away from the engine or manifold. As used herein, the term "in fluid communication" refers to articles positioned on the same exhaust line. Illustratively, a common exhaust stream passes through articles that are in fluid communication with each other. Articles in fluid communication may be adjacent to each other in the exhaust line. Alternatively, articles in fluid communication may be separated by one or more articles, which may be referred to as "washcoated monoliths."

As used herein, the term "impregnated" or "impregnation" refers to permeation of a catalytic material into the porous structure of a support material.

As used herein, the term "material" refers to an element, constituent, or substance of which something is composed or can be made.

As used herein, the term "nanoparticle" refers to a particle having at least one dimension that is the range of 1 nm to 999 nm in length.

As used herein, the terms "on" and "over," in reference to a coating layer, may be used synonymously. Illustratively, the term "directly on" means in direct contact with. In some embodiments, disclosed articles are referred to as comprising one coating layer "on" a second coating layer. Such language is intended to encompass embodiments with intervening layers, where direct contact between the coating layers is not required.

As used herein, the term "particle size" refers to the smallest diameter sphere that will completely enclose the particle, and this measurement relates to an individual particle as opposed to an agglomeration of two or more particles. Particle size may be measured by laser light scattering techniques, with dispersions or dry powders, e.g., according to ASTM method D4464. Particle size may also be measured by Scanning Electron Microscopy (SEM) or Transmission Electron Microscopy (TEM) for submicron size particles, or by a particle size analyzer for support-containing particles (micron size). In addition to TEM, carbon monoxide (CO) chemisorption may be used to determine average PGM particle size. This technique does not differentiate between various PGM species (e.g., Pt, Pd, etc., as compared to XRD, TEM, and SEM) and only determines the average particle size.

As used herein, the term "platinum group metal" (PGM) refers to a platinum group metal or an oxide thereof, such as, e.g., platinum (Pt), palladium (Pd), ruthenium (Ru), rhodium (Rh), osmium (Os), iridium (Ir), an oxide of any of the foregoing, and mixtures of any of the foregoing. In some embodiments, the PGM may be in any valence state.

As used herein, the term "room temperature" or "ambient temperature" refers to a temperature in the range of 15°C to 25°C, such as, e.g., 20°C to 25°C.

As used herein, the term "substantially" refers to a property having a statistical occurrence greater that 75%.

As used herein, the term "substrate" refers to a monolithic material onto which a catalyst composition, e.g., a catalytic coating, is disposed, e.g., in the form of a washcoat. In some embodiments, the substrate is selected from flow-through monoliths and monolithic wall-flow filters. As used herein, the term "flow-through substrate" refers to a substrate comprising parallel channels running in the axial direction. As used herein, the term "wall-flow substrate" refers to a substrate comprising adjacent channels, wherein the adjacent channels are alternatively plugged at each end. Flow-through and wall-flow substrates are known in the art and taught, e.g., in PCT International Application Publication No. WO 2016/070090, which is incorporated herein by reference. As used herein, a "monolithic substrate" refers to a unitary structure that is homogeneous and continuous from inlet to outlet. As used herein, the term "support" refers to any high surface area material, e.g., refractory metal oxide material, upon which a catalytic component is applied.

As used herein, the term "washcoat" refers to a thin, adherent coating of a material applied to a substrate material. A washcoat layer includes a compositionally distinct layer of material disposed on the surface of a substrate or an underlying washcoat layer. A substrate may contain one or more washcoat layers, and each washcoat layer may be different in some way (e.g., may differ in physical properties thereof such as, e.g., particle size) and/or may differ in its chemical catalytic functions.

**Embodiments:**

Without limitation, some embodiments of the disclosure include:

1. A nanoparticle comprising a platinum group metal (PGM) and a base metal (BM), wherein:

a molar percentage of the PGM is in the range of 25% to 95%, calculated based on a total number of moles of the PGM and the BM;
the nanoparticle comprises an alloy of the PGM and the BM; and
the nanoparticle has a particle size in the range of 1 nm to 4 nm.

2. The nanoparticle of embodiment 1, wherein the molar percentage of the PGM is in the range of 25% to 75%,

3. The nanoparticle of embodiment 1, wherein the molar percentage of the PGM is in the range of 25% to 67%.

4. The nanoparticle of embodiment 1, wherein the molar percentage of the PGM is in the range of 25% to 65%.

5. The nanoparticle of embodiment 1, wherein the molar percentage of the PGM is in the range of 33% to 65%.

6. The nanoparticle of embodiment 1, wherein the molar percentage of the PGM is in the range of 60% to 66%.

7. The nanoparticle of embodiment 1, wherein the molar percentage of the PGM is in the range of 45% to 55%.

8. The nanoparticle of embodiment 1, wherein the molar percentage of the PGM is in the range of 33% to 40%.

9. The nanoparticle of any one of embodiments 1-8, wherein the particle size is in the range of 2.5 nm to 3.5 nm.

10. A nanoparticle comprising a platinum group metal (PGM) and a base metal (BM), wherein:

a molar percentage of the PGM is in the range of 50% to 95%, based on a total number of moles of the PGM and the BM;
the nanoparticle comprises an alloy of the PGM and the BM; and
the nanoparticle has a particle size in the range of 4 nm to 7 nm.

11. The nanoparticle of embodiment 10, wherein the molar percentage of the PGM is in the range of 60% to 95%.

12. The nanoparticle of embodiment 10, wherein the molar percentage of the PGM is in the range of 65% to 90%.

13. The nanoparticle of embodiment 10, wherein the molar percentage of the PGM is in the range of 67% to 88%.

14. The nanoparticle of embodiment 10, wherein the molar percentage of the PGM is in the range of 80% to 90%.

15. The nanoparticle of embodiment 10, wherein the molar percentage of the PGM is in the range of 65% to 75%.

16. The nanoparticle of any one of embodiments 10-15, wherein the particle size is in the range of 4 nm to 6 nm.

17. The nanoparticle of any one of embodiments 1-16, wherein the PGM is selected from Pd, Pt, and combinations of the foregoing.

18. The nanoparticle of any one of embodiments 1-17, wherein the PGM is Pt.

19. The nanoparticle of any one of embodiments 1-18, wherein the BM is selected from Cu, Co, Mn, Ni, and combinations of any of the foregoing.

20. The nanoparticle of any one of embodiments 1-19, wherein the BM is Cu.

21. The nanoparticle of any one of embodiments 1-20, wherein the alloy comprises at least 2 at% (e.g., at least 5 at%, 10 at%, 15 at%, 20 at%, 25 at%, 30 at%) of the BM.

22. A nanoparticle prepared by a process comprising:

> dispersing seeds of a platinum group metal (PGM) in an organic solvent to produce a first mixture;
> adding a base metal (BM) precursor to the first mixture to produce a second mixture;
> adding a coordinating solvent to the second mixture to produce a third mixture;
> rapidly heating the third mixture to a high temperature;
> holding the third mixture at the high temperature for a time period;
> rapidly cooling the mixture to room temperature to form a nanoparticle; and
> isolating the nanoparticle.

23. The nanoparticle of embodiment 22, wherein the PGM is selected from Pd, Pt, and combinations of the foregoing.

24. The nanoparticle of embodiment 22 or 23, wherein the PGM is Pt.

25. The nanoparticle of embodiment 42, wherein the seeds of the PGM have particle sizes in the range of 1.5 nm to 3.5 nm.

26. The nanoparticle of embodiment 43, wherein a molar percentage of the PGM in the second mixture is in the range of 25% to 95%, calculated based on a total number of moles of the PGM and the BM in the second mixture.

27. The nanoparticle of embodiment 43 or 44, wherein a molar percentage of the PGM in the second mixture is 63%, calculated based on a total number of moles of the PGM and the BM in the second mixture.

28. The nanoparticle of embodiment 43 or 44, wherein a molar percentage of the PGM in the second mixture is 49%, calculated based on a total number of moles of the PGM and the BM in the second mixture.

29. The nanoparticle of embodiment 43 or 44, wherein a molar percentage of the PGM in the second mixture is 37%, calculated based on a total number of moles of the PGM and the BM in the second mixture.

30. The nanoparticle of embodiment 42, wherein the seeds of the PGM have particle sizes in the range of 4 nm to 6 nm.

31. The nanoparticle of embodiment 30, wherein a molar percentage of the PGM in the second mixture is in the range of 50% to 95%, calculated based on a total number of moles of the PGM and the BM in the second mixture.

32. The nanoparticle of embodiment 30 or 31, wherein a molar percentage of the PGM in the second mixture is 69%, calculated based on a total number of moles of the PGM and the BM in the second mixture.

33. The nanoparticle of embodiment 30 or 31, wherein a molar percentage of the PGM in the second mixture is 86%, calculated based on a total number of moles of the PGM and the BM in the second mixture.

34. The nanoparticle of embodiment 22 or 23, wherein the PGM is Pd.

35. The nanoparticle of embodiment 34, wherein the seeds of the PGM have particle sizes in the range of 2.5 nm to 4.5 nm.

36. The nanoparticle of any one of embodiments 22-35, wherein the organic solvent is selected from hexanes, dichloromethane, diethyl ether, chloroform, heptanes, tetrahydrofuran, and acetonitrile.

37. The nanoparticle of any one of embodiments 22-36, wherein the organic solvent is hexanes.

38. The nanoparticle of any one of embodiments 22-37, wherein the BM precursor is selected from $Co(acac)_2$, $Mn(acac)_3$, $Ni(acac)_2$, $Cu(acac)_2$, and combinations of any of the foregoing.

39. The nanoparticle of any one of embodiments 22-38, wherein the BM precursor is $Cu(acac)_2$.

40. The nanoparticle of any one of embodiments 22-39, wherein the coordinating solvent is selected from non-phosphine solvents.

41. The nanoparticle of any one of embodiments 22-40, wherein the coordinating solvent is selected from oleylamine, oleic acid, 1-octadecene, trioctylamine, and combinations of any of the foregoing.

42. The nanoparticle of any one of embodiments 22-41, wherein the coordinating solvent is oleylamine.

43. The nanoparticle of any one of embodiments 22-42, wherein rapidly heating comprises heating at a rate of $40°C$ $min^{-1}$.

44. The nanoparticle of any one of embodiments 22-43, wherein the high temperature is in the range of 250 °C to 300 °C.

45. The nanoparticle of any one of embodiments 22-44, wherein the high temperature is 280 °C.

46. The nanoparticle of any one of embodiments 22-45, wherein the time period is 30 minutes.

47. The nanoparticle of any one of embodiments 22-46, wherein isolating the nanoparticle comprises at least one round of precipitation using at least one antisolvent.

48. The nanoparticle of embodiment 47, wherein the at least one antisolvent is selected from toluene, isopropanol, ethanol, and combinations of any of the foregoing.

49. The nanoparticle of embodiment 47 or 48, wherein isolating the nanoparticle comprises two rounds of precipitation.

50. The nanoparticle of any one of embodiments 47-49, wherein isolating the nanoparticle further comprises centrifugation.

51. A catalytic composition prepared by a process comprising:

dispersing a nanoparticle of any one of embodiments 1-50 in a first organic solvent to produce a first dispersion;
dispersing a support material in a second organic solvent to produce a second dispersion;
adding a portion of the first dispersion to the second dispersion to produce a mixture;
stirring the mixture for a time period; and
isolating the catalytic composition.

52. The catalytic composition of embodiment 51, wherein the nanoparticle comprises 0.3 wt% of a total weight of the nanoparticle and the support material.

53. The catalytic composition of embodiment 51 or 52, wherein the first organic solvent is selected from hexanes, dichloromethane, diethyl ether, chloroform, heptanes, tetrahydrofuran, and acetonitrile.

54. The catalytic composition of any one of embodiments 51-53, wherein the first organic solvent is hexanes.

55. The catalytic composition of any one of embodiments 51-54, wherein the support material comprises alumina, silica, zirconia, titania, ceria, or a combination of any of the foregoing.

56. The catalytic composition of any one of embodiments 51-55, wherein the support material is $Al_2O_3$.

57. The catalytic composition of any one of embodiments 51-55, wherein the support material is lanthanum-stabilized zirconia.

58. The catalytic composition of any one of embodiments 51-57, wherein the support material does not substantially change the electronic structure of the nanoparticle.

59. The catalytic composition of any one of embodiments 51--58, wherein the second organic solvent is selected from hexanes, dichloromethane, diethyl ether, chloroform, heptanes, tetrahydrofuran, and acetonitrile.

60. The catalytic composition of any one of embodiments 51-59, wherein the second organic solvent is hexanes.

61. The catalytic composition of any one of embodiments 51--60, wherein the time period is at least 8 hours.

62. The catalytic composition of any one of embodiments 51--61, wherein isolating the catalytic composition comprises centrifuging the mixture to isolate a catalytic solid.

63. The catalytic composition of embodiment 62, wherein centrifuging the mixture comprises centrifuging the mixture at 8000 rpm for 3 minutes to isolate the catalytic solid.

64. The catalytic composition of embodiment 62 or 63, wherein isolating the catalytic composition further comprises drying the catalytic solid.

65. The catalytic composition of embodiment 64, wherein drying the catalytic solid comprises drying the catalytic solid at 80°C for at least 8 hours.

66. The catalytic composition of embodiment 64 or 65, wherein isolating the catalytic composition further comprises sieving the catalytic solid to isolate the catalytic composition.

67. A catalytic composition comprising:

a nanoparticle of any one of embodiments 1-50; and
a support material.

68. The catalytic composition of embodiment 67, wherein the support material comprises alumina, silica, zirconia, titania, ceria, or a combination of any of the foregoing.

69. The catalytic composition of embodiment 67 or 68, wherein the support material is $Al_2O_3$.

70. The catalytic composition of any one of embodiments 67-69, wherein the support material is lanthanum-stabilized zirconia.

71. The catalytic composition of any one of embodiments 67-70, wherein the support material does not substantially change the electronic structure of the nanoparticle.

72. The catalytic composition of any one of embodiments 51-71, wherein the nanoparticle comprises 0.2 wt% to 0.4 wt% of a total weight of the catalytic composition.

73. The catalytic composition of any one of embodiments 51-72, wherein the catalytic composition has an exposed metal surface area in the range of 0.01 $m^2/g_{catalyst}$ to 0.1 $m^2/g_{catalyst}$.

74. A catalytic article comprising:

a substrate having an inlet end and an outlet end defining an overall length; and
a catalytic coating comprising a washcoat disposed on a portion of the overall length of the substrate, wherein the washcoat comprises a catalyst composition of any one of embodiments 51-73.

75. An exhaust gas treatment system comprising a catalytic article of embodiment 74, wherein the catalytic article is downstream of and in fluid communication with an internal combustion engine.

76. A method of treating an exhaust gas stream comprising a pollutant, the method comprising passing the exhaust gas stream through a catalytic article of embodiment 74, or an exhaust gas treatment system of embodiment 75.

77. The method of embodiment 76, wherein the pollutant comprises hydrocarbons.

78. The method of embodiment 76 or 77, wherein the exhaust gas stream is passed through the catalytic article or the exhaust gas treatment system at a low temperature.

79. The method of embodiment 78, wherein the low temperature is in the range of 100°C to 150°C.

80. A method of preparing a nanoparticle comprising a platinum group metal (PGM) and a base metal (BM), the method comprising:

dispersing seeds of a PGM in an organic solvent to produce a first mixture;
adding a BM precursor to the first mixture to produce a second mixture;
adding a coordinating solvent to the second mixture to produce a third mixture;
rapidly heating the third mixture to a high temperature;
holding the third mixture at the high temperature for a time period;
rapidly cooling the mixture to room temperature; and
isolating the nanoparticle.

81. The method of embodiment 80, wherein the PGM is selected from palladium-group platinum-group elements and combinations thereof.

82. The method of embodiment 80 or 81, wherein the PGM is selected from Pd, Pt, and combinations of the foregoing.

83. The method of any one of embodiments 80-82, wherein the PGM is Pt.

84. The method of embodiment 83, wherein the seeds of the PGM have particle sizes in the range of 1.5 nm to 3.5 nm.

85. The method of embodiment 84, wherein a molar percentage of the PGM in the second mixture is in the range of 25% to 95%, calculated based on a total number of moles of the PGM and the BM in the second mixture.

86. The method of embodiment 84 or 85, wherein a molar percentage of the PGM in the second mixture is 63%, calculated based on a total number of moles of the PGM and the BM in the second mixture.

87. The method of embodiment 84 or 85, wherein a molar percentage of the PGM in the second mixture is 49%, calculated based on a total number of moles of the PGM and the BM in the second mixture.

88. The method of embodiment 84 or 85, wherein a molar percentage of the PGM in the second mixture is 37%, calculated based on a total number of moles of the PGM and the BM in the second mixture.

89. The method of embodiment 83, wherein the seeds of the PGM have particle sizes in the range of 4 nm to 6 nm.

90. The method of embodiment 89, wherein a molar percentage of the PGM in the second mixture is in the range of 50% to 95%, calculated based on a total number of moles of the PGM and the BM in the second mixture.

91. The method of embodiment 89 or 90, wherein a molar percentage of the PGM in the second mixture is 69%, calculated based on a total number of moles of the PGM and the BM in the second mixture.

92. The method of embodiment 89 or 90, wherein a molar percentage of the PGM in the second mixture is 86%, calculated based on a total number of moles of the PGM and the BM in the second mixture.

93. The method of any one of embodiments 80-82, wherein the PGM is Pd.

94. The method of embodiment 93, wherein the seeds of the PGM have particle sizes in the range of 2.5 nm to 4.5 nm.

95. The method of any one of embodiments 80-94, wherein the organic solvent is selected from hexanes, dichloromethane, diethyl ether, chloroform, heptanes, tetrahydrofuran, and acetonitrile.

96. The method of any one of embodiments 80-95, wherein the organic solvent is hexanes.

97. The method of any one of embodiments 80-96, wherein the BM precursor is selected from $Co(acac)_2$, $Mn(acac)_3$, $Ni(acac)_2$, $Cu(acac)_2$, and combinations of any of the foregoing.

98. The method of any one of embodiments 80-97, wherein the BM precursor is $Cu(acac)_2$.

99. The method of any one of embodiments 80-98, wherein the coordinating solvent is selected from non-phosphine solvents.

100. The method of any one of embodiments 80-99, wherein the coordinating solvent is selected from oleylamine, oleic acid, 1-octadecene, trioctylamine, and combinations of any of the foregoing.

101. The method of any one of embodiments 80-100, wherein the coordinating solvent is oleylamine.

102. The method of any one of embodiments 80-101, wherein rapidly heating comprises heating at a rate of 40°C min$^{-1}$.

103. The method of any one of embodiments 80-102, wherein the high temperature is in the range of 250°C to 300°C.

104. The method of any one of embodiments 80-103, wherein the high temperature is 280°C.

105. The method of any one of embodiments 80-104, wherein the time period is 30 minutes.

106. The method of any one of embodiments 80-105, wherein isolating the nanoparticle comprises a round of precipitation using an antisolvent.

107. The method of embodiment 106, wherein the antisolvent is selected from toluene, isopropanol, ethanol, and combinations of any of the foregoing.

108. The method of embodiment 106 or 107, wherein isolating the nanoparticle comprises two rounds of precipitation.

109. The method of any one of embodiments 106-108, wherein isolating the nanoparticle further comprises centrifugation.

110. A method of preparing a catalytic composition, the method comprising:

dispersing a nanoparticle of any one of embodiments 1-50 in a first organic solvent to produce a first dispersion;
dispersing a support material in a second organic solvent to produce a second dispersion;
adding a portion of the first dispersion to the second dispersion to produce a mixture;
stirring the mixture for a time period; and
isolating the catalytic composition.

111. The catalytic composition of embodiment 110, wherein the nanoparticle comprises 0.3 wt% of a total weight of the nanoparticle and the support material.

112. The catalytic composition of embodiment 110 or 111, wherein the first organic solvent is selected from hexanes, dichloromethane, diethyl ether, chloroform, heptanes, tetrahydrofuran, and acetonitrile.

113. The catalytic composition of any one of embodiments 110-112, wherein the first organic solvent is hexanes.

114. The catalytic composition of any one of embodiments 110-113, wherein the support material comprises alumina, silica, zirconia, titania, ceria, or a combination of any of the foregoing.

115. The catalytic composition of any one of embodiments 110-114, wherein the support material is $Al_2O_3$.

116. The catalytic composition of any one of embodiments 110-114, wherein the support material is lanthanum-stabilized zirconia.

117. The catalytic composition of any one of embodiments 110-116, wherein the support material does not substantially change the electronic structure of the nanoparticle.

118. The catalytic composition of any one of embodiments 110-117, wherein the second organic solvent is selected from hexanes, dichloromethane, diethyl ether, chloroform, heptanes, tetrahydrofuran, and acetonitrile.

119. The catalytic composition of any one of embodiments 110-118, wherein the second organic solvent is hexanes.

120. The catalytic composition of any one of embodiments 110--119, wherein the time period is at least 8 hours.

121. The catalytic composition of any one of embodiments 110--120, wherein isolating the catalytic composition comprises centrifuging the mixture to isolate a catalytic solid.

122. The catalytic composition of embodiment 121, wherein centrifuging the mixture comprises centrifuging the mixture at 8000 rpm for 3 minutes to isolate the catalytic solid.

123. The catalytic composition of embodiment 121 or 122, wherein isolating the catalytic composition further comprises drying the catalytic solid.

124. The catalytic composition of embodiment 123, wherein drying the catalytic solid comprises drying the catalytic solid at 80°C for at least 8 hours.

125. The catalytic composition of embodiment 123 or 124, wherein isolating the catalytic composition further comprises sieving the catalytic solid to isolate the catalytic composition.

Nanoparticles with a Particle Size in the Range of 1 nm to 4 nm

Some embodiments of this disclosure relate to a nanoparticle comprising a platinum group metal (PGM) and a base metal (BM), wherein:

a molar percentage of the PGM is in the range of 25% to 95%, calculated based on a total number of moles of the PGM and the BM;
the nanoparticle comprises an alloy of the PGM and the BM; and
the nanoparticle has a particle size in the range of 1 nm to 4 nm.

In some embodiments, the particle size is in the range of 2.5 nm to 3.5 nm.
In some embodiments, the PGM is selected from Pd, Pt, and combinations of the foregoing. In some embodiments, the PGM is Pt.
In some embodiments, the BM is selected from Cu, Co, Mn, Ni, and combinations of any of the foregoing. In some embodiments, the BM is Cu. In some embodiments, the BM is Co. In some embodiments, the BM is Mn. In some embodiments, the BM is Ni.
In some embodiments, the BM has an FCC structure. In some embodiments, the BM has an HCP structure. In some embodiments, the BM has a BCC structure.
In some embodiments, the alloy comprises at least 2 at% of the BM. In some embodiments, the alloy comprises at least 5 at% of the BM. In some embodiments, the alloy comprises at least 10 at% of the BM. In some embodiments, the alloy comprises at least 15 at% of the BM. In some embodiments, the alloy comprises at least 20 at% of the BM. In some embodiments, the alloy comprises at least 25 at% of the BM. In some embodiments, the alloy comprises at least 30 at% of the BM. In some embodiments, the molar percentage of the PGM is in the range of 25% to 75%. In some embodiments, the molar percentage of the PGM is in the range of 25% to 67%. In some embodiments, the molar percentage of the PGM is in the range of 25% to 65%. In some embodiments, the molar percentage of the PGM is in the range of 33% to 65%.
In some embodiments, the molar percentage of the PGM is in the range of 60% to 66%. In some embodiments, the molar percentage of the PGM is in the range of 45% to 55%. In some embodiments, the molar percentage of the PGM is in the range of 33% to 40%.
In some embodiments, the nanoparticle consists essentially of the PGM and the BM.

Nanoparticles with a Particle Size in the Range of 4 nm to 7 nm

Some embodiments of this disclosure relate to a nanoparticle comprising a platinum group metal (PGM) and a base metal (BM), wherein:

a molar percentage of the PGM is in the range of 50% to 95%, calculated based on a total number of moles of the PGM and the BM;
the nanoparticle comprises an alloy of the PGM and the BM; and
the nanoparticle has a particle size in the range of 4 nm to 7 nm.

In some embodiments, the particle size is in the range of 4 nm to 6 nm.

In some embodiments, the PGM is selected from palladium-group platinum-group elements and combinations thereof. In some embodiments, the PGM is selected from Pd, Pt, and combinations of the foregoing. In some embodiments, the PGM is Pt.

In some embodiments, the BM is selected from Cu, Co, Mn, Ni, and combinations of any of the foregoing. In some embodiments, the BM is Cu. In some embodiments, the BM is Co. In some embodiments, the BM is Mn. In some embodiments, the BM is Ni.

In some embodiments, the BM has an FCC structure. In some embodiments, the BM has an HCP structure. In some embodiments, the BM has a BCC structure.

In some embodiments, the alloy comprises at least 2 at% of the BM. In some embodiments, the alloy comprises at least 5 at% of the BM. In some embodiments, the alloy comprises at least 10 at% of the BM. In some embodiments, the alloy comprises at least 15 at% of the BM. In some embodiments, the alloy comprises at least 20 at% of the BM. In some embodiments, the alloy comprises at least 25 at% of the BM. In some embodiments, the alloy comprises at least 30 at% of the BM. In some embodiments, the molar percentage of the PGM is in the range of 60% to 95%. In some embodiments, the molar percentage of the PGM is in the range of 65% to 90%. In some embodiments, the molar percentage of the PGM is in the range of 67% to 88%. In some embodiments, the molar percentage of the PGM is in the range of 80% to 90%. In some embodiments, the molar percentage of the PGM is in the range of 65% to 75%.

In some embodiments, the nanoparticle consists essentially of the PGM and the BM.

Catalytic Compositions

Some embodiments of this disclosure relate to a catalytic composition comprising:

> a nanoparticle disclosed herein; and
> a support material.

In some embodiments, the support material comprises alumina, silica, zirconia, titania, ceria, or a combination of any of the foregoing. In some embodiments, the support material is $Al_2O_3$. In some embodiments, the support material is lanthanum-stabilized zirconia. In some embodiments, the support material does not substantially change the electronic structure of the at least one nanoparticle. In some embodiments, the nanoparticle comprises 0.2 wt% to 0.4 wt% of a total weight of the catalytic composition. In some embodiments, the nanoparticle comprises 0.3 wt% of a total weight of the catalytic composition.

In some embodiments, the nanoparticle is disposed in or on the at least one support material through association or dispersion. In some embodiments, the nanoparticle is disposed in or on the at least one support material through association. In some embodiments, the nanoparticle is disposed in or on the at least one support material through dispersion.

In some embodiments, the nanoparticle is impregnated in or on the at least one support material.

In some embodiments, the catalytic composition has an exposed metal surface area in the range of 0.01 $m^2/g_{catalyst}$ to 0.1 $m^2/g_{catalyst}$.

Catalytic Articles

Some embodiments of this disclosure relate to a catalytic article comprising:

> a substrate having an inlet end and an outlet end defining an overall length; and
> a catalytic coating comprising a washcoat disposed on a portion of the overall length of the substrate, wherein the washcoat comprises a catalyst composition disclosed herein. In some embodiments, the catalytic article has a zoned configuration.

In some embodiments, the catalytic article has a layered configuration.

In some embodiments, the substrate is selected from flow-through substrates and wall-flow substrates.

In some embodiments, the substrate is selected from flow-through substrates. In some embodiments, the substrate is selected from wall-flow substrates.

In some embodiments, the substrate is selected from monolithic substrates. In some embodiments, the substrate is selected from flow-through monoliths and monolithic wall-flow filters. In some embodiments, the substrate is selected from flow-through monoliths. In some embodiments, the substrate is selected from monolithic wall-flow filters.

Exhaust Gas Treatment Systems

Some embodiments of this disclosure relate to an exhaust gas treatment system comprising a catalytic article disclosed herein, wherein the catalytic article is downstream of and in fluid communication with an internal combustion engine.

In some embodiments, the internal combustion engine is a diesel engine. In some embodiments, the internal combustion engine is a diesel engine which operates at combustion conditions with air in excess of that required for stoichiometric combustion, i.e., lean conditions.

In some embodiments, the internal combustion engine is a gasoline engine (e.g., a lean burn gasoline engine) or an engine associated with a stationary source (e.g., electricity generators or pumping stations). In some embodiments, the internal combustion engine is a gasoline engine. In some embodiments, the internal combustion engine is a lean burn gasoline engine. In some embodiments, the internal combustion engine is associated with a stationary source. In some embodiments, the internal combustion engine is associated with an electricity generator. In some embodiments, the internal combustion engine is associated with a pumping station.

Exhaust gas treatment systems disclosed herein may contain more than one catalytic article positioned downstream from the internal combustion engine in fluid communication with the exhaust gas stream. In some embodiments, the exhaust gas treatment system may further comprise a soot filter and/or an ammonia oxidation catalyst. In some embodiments, the soot filter may be uncatalyzed. In some embodiments, the soot filter may be catalyzed.

The relative placement of the various catalytic components present within the exhaust gas treatment system can vary. In some embodiments, the exhaust gas stream is received into the catalytic article(s) or exhaust gas treatment system(s) by entering the upstream end and exiting the downstream end.

Methods of Preparing Nanoparticles

Some embodiments of this disclosure relate to a method of preparing a nanoparticle comprising a platinum group metal (PGM) and a base metal (BM), the method comprising:

> dispersing seeds of a platinum group metal (PGM) in an organic solvent to produce a first mixture;
> adding a base metal (BM) precursor to the first mixture to produce a second mixture;
> adding a coordinating solvent to the second mixture to produce a third mixture;
> rapidly heating the third mixture to a high temperature;
> holding the third mixture at the high temperature for a time period;
> rapidly cooling the mixture to room temperature; and
> isolating the nanoparticle.

In some embodiments, the PGM is selected from palladium-group platinum-group elements and combinations thereof. In some embodiments, the PGM is selected from Pd, Pt, and combinations of the foregoing. In some embodiments, the PGM is Pt.

In some embodiments, the seeds of the PGM have particle sizes in the range of 1.5 nm to 3.5 nm. In some embodiments, a molar percentage of the PGM in the second mixture is in the range of 25% to 95%, calculated based on a total number of moles of the PGM and the BM in the second mixture. In some embodiments, a molar percentage of the PGM in the second mixture is 63%, calculated based on a total number of moles of the PGM and the BM in the second mixture. In some embodiments, a molar percentage of the PGM in the second mixture is 49%, calculated based on a total number of moles of the PGM and the BM in the second mixture. In some embodiments, a molar percentage of the PGM in the second mixture is 37%, calculated based on a total number of moles of the PGM and the BM in the second mixture.

In some embodiments, the seeds of the PGM have particle sizes in the range of 4 nm to 6 nm. In some embodiments, a molar percentage of the PGM in the second mixture is in the range of 50% to 95%, calculated based on a total number of moles of the PGM and the BM in the second mixture. In some embodiments, a molar percentage of the PGM in the second mixture is 69%, calculated based on a total number of moles of the PGM and the BM in the second mixture. In some embodiments, a molar percentage of the PGM in the second mixture is 86%, calculated based on a total number of moles of the PGM and the BM in the second mixture.

In some embodiments, the PGM is Pd. In some embodiments, the seeds of the PGM have particle sizes in the range of 2.5 nm to 4.5 nm.

In some embodiments, the organic solvent is selected from hexanes, dichloromethane, diethyl ether, chloroform, heptanes, tetrahydrofuran, and acetonitrile. In some embodiments, the organic solvent is hexanes.

In some embodiments, the BM precursor is selected from $Co(acac)_2$, $Mn(acac)_3$, $Ni(acac)_2$, $Cu(acac)_2$, and combinations of any of the foregoing. In some embodiments, the BM precursor is $Co(acac)_2$. In some embodiments, the BM precursor is $Mn(acac)_3$. In some embodiments, the BM precursor is $Ni(acac)_2$. In some embodiments, the BM precursor is $Cu(acac)_2$.

In some embodiments, the coordinating solvent is selected from non-phosphine solvents. In some embodiments, the coordinating solvent is selected from oleylamine, oleic acid, 1-octadecene, trioctylamine, and combinations of any of the foregoing. In some embodiments, the coordinating solvent is oleylamine.

In some embodiments, rapidly heating comprises heating at a rate of 40°C min$^{-1}$.

In some embodiments, the high temperature is in the range of 250°C to 300°C. In some embodiments, the high temperature is 280°C.

In some embodiments, the time period is 30 minutes.

In some embodiments, isolating the nanoparticle comprises a round of precipitation using at least one antisolvent. In some embodiments, the antisolvent is selected from toluene, isopropanol, ethanol, and combinations of any of the foregoing.

In some embodiments, isolating the nanoparticle comprises two rounds of precipitation.

In some embodiments, isolating the nanoparticle further comprises centrifugation.

Some embodiments of the present disclosure relate to a method of preparing a nanoparticle comprising a platinum group metal (PGM) and a base metal (BM) comprising laser vaporization of an alloy rod, a mixed metallic powder, or two monometallic targets.

Some embodiments of the present disclosure relate to a method of preparing a nanoparticle comprising a platinum group metal (PGM) and a base metal (BM) comprising pulsed laser ablation in a liquid. Some embodiments of the present disclosure relate to a method of preparing a nanoparticle comprising a platinum group metal (PGM) and a base metal (BM) comprising vaporization of bimetallic targets by passing an intense electrical discharge through the bimetallic targets.

Some embodiments of the present disclosure relate to a method of preparing a nanoparticle comprising a platinum group metal (PGM) and a base metal (BM) comprising a step of microwave synthesis. Some embodiments of the present disclosure relate to a method of preparing a nanoparticle comprising a platinum group metal (PGM) and a base metal (BM) comprising a step of atomic layer deposition. Some embodiments of the present disclosure relate to a method of preparing a nanoparticle comprising a platinum group metal (PGM) and a base metal (BM) comprising a step of electrochemical synthesis. Some embodiments of the present disclosure relate to a method of preparing a nanoparticle comprising a platinum group metal (PGM) and a base metal (BM) comprising thermal decomposition of metal complexes.

Some embodiments of the present disclosure relate to a method of preparing a nanoparticle comprising a platinum group metal (PGM) and a base metal (BM) comprising chemical reduction of a mixture of salts in a solution.

Some embodiments of the present disclosure relate to a method of preparing a nanoparticle comprising a platinum group metal (PGM) and a base metal (BM) comprising successive reduction of chemical complexes.

Some embodiments of the present disclosure relate to a method of preparing a nanoparticle comprising a platinum group metal (PGM) and a base metal (BM) comprising co-reduction of chemical complexes. Also disclosed herein is a nanoparticle prepared by a process described herein.

Methods of Preparing Catalytic Compositions

Some embodiments of this disclosure relate to a method of preparing a catalytic composition, the method comprising:

dispersing a nanoparticle disclosed herein in a first organic solvent to produce a first dispersion;
dispersing a support material in a second organic solvent to produce a second dispersion;
adding a portion of the first dispersion to the second dispersion to produce a mixture;
stirring the mixture for a time period; and
isolating the catalytic composition.

In some embodiments, the nanoparticle comprises 0.3 wt% of a total weight of the nanoparticle and the support material.

In some embodiments, the first organic solvent is selected from hexanes, dichloromethane, diethyl ether, chloroform, heptanes, tetrahydrofuran, and acetonitrile. In some embodiments, the first organic solvent is hexanes.

In some embodiments, the support material comprises alumina, silica, zirconia, titania, ceria, or a combination of any of the foregoing. In some embodiments, the support material is $Al_2O_3$. In some embodiments, the support material is lanthanum-stabilized zirconia. In some embodiments, the support material does not substantially change the electronic structure of the at least one nanoparticle.

In some embodiments, the second organic solvent is selected from hexanes, dichloromethane, diethyl ether, chloroform, heptanes, tetrahydrofuran, and acetonitrile. In some embodiments, the second organic solvent is hexanes.

In some embodiments, the time period is at least 8 hours.

In some embodiments, isolating the catalytic composition comprises centrifuging the mixture to isolate a catalytic solid. In some embodiments, centrifuging the mixture comprises centrifuging the mixture at 8000 rpm for 3 minutes to isolate the catalytic solid.

In some embodiments, isolating the catalytic composition further comprises drying the catalytic solid.

In some embodiments, drying the catalytic solid comprises drying the catalytic solid at 80°C for at least 8 hours.

In some embodiments, isolating the catalytic composition further comprises sieving the catalytic solid to isolate the catalytic composition.

Also disclosed herein is a catalytic composition prepared by a process described herein.

Methods of Treating an Exhaust Gas Stream

Some embodiments of this disclosure relate to a method of treating an exhaust gas stream comprising a pollutant, the method comprising passing the exhaust gas stream through a catalytic article disclosed herein or an exhaust gas treatment system disclosed herein.

In some embodiments, the pollutant comprises hydrocarbons. In some embodiments, the pollutant comprises propene.

In some embodiments, the exhaust gas stream is passed through the catalytic article or the exhaust gas treatment system at a low temperature. In some embodiments, the low temperature is in the range of 100°C to 150°C.

Claims or descriptions that include "or" or "and/or" between at least one members of a group are considered satisfied if one, more than one, or all of the group members are present in, employed in, or otherwise relevant to a given product or process unless indicated to the contrary or otherwise evident from the context. The disclosure includes embodiments in which exactly one member of the group is present in, employed in, or otherwise relevant to a given product or process. The disclosure includes embodiments in which more than one, or all the group members are present in, employed in, or otherwise relevant to a given product or process.

Furthermore, the disclosure encompasses all variations, combinations, and permutations in which at least one limitation, element, clause, and descriptive term from at least one of the listed claims is introduced into another claim. For example, any claim that is dependent on another claim can be modified to include at least one limitation found in any other claim that is dependent on the same base claim. Where elements are presented as lists, such as, e.g., in Markush group format, each subgroup of the elements is also disclosed, and any element(s) can be removed from the group. It should be understood that, in general, where the disclosure, or aspects of the disclosure, is/are referred to as comprising particular elements and/or features, embodiments of the disclosure or aspects of the disclosure consist, or consist essentially of, such elements and/or features. For purposes of simplicity, those embodiments have not been specifically set forth in haec verba herein. Where ranges are given (such as, e.g., from [X] to [Y]), endpoints (such as, e.g., [X] and [Y] in the phrase "from [X] to [Y]") are included unless otherwise indicated. Furthermore, unless otherwise indicated or otherwise evident from the context and understanding of one of ordinary skill in the art, values that are expressed as ranges can assume any specific value or sub-range within the stated ranges in different embodiments of the disclosure, to the tenth of the unit of the lower limit of the range, unless the context clearly dictates otherwise.

Those of ordinary skill in the art will recognize or be able to ascertain using no more than routine experimentation, many equivalents to the specific embodiments of the disclosure described herein. Such equivalents are intended to be encompassed by the following claims.

**EXAMPLES**

The following examples are intended to be illustrative and are not meant in any way to limit the scope of the disclosure.

**Abbreviations**

| | |
|---|---|
| % | Percent |
| ~ | Approximately |
| < | Less than |
| > | Greater than |
| at% | Atomic percentage |
| g | Gram |
| h | Hour(s) |

| | |
|---|---|
| ICP-OES | Inductively coupled plasma-optical emission spectrometry |
| $m^2$ | Square meter(s) |
| M | Base metal |
| mg | Milligram |
| min | Minute(s) |
| mL | Milliliter(s) |
| mm | Millimeter(s) |
| NP | Nanoparticle |
| rpm | Revolutions per minute |
| s | Second(s) |
| TGA | Thermogravimetric analysis |
| TEM | Transmission electron microscopy |
| wt% | Weight percentage |
| XRD | X-ray powder diffraction |
| $\mu$L | Microliter(s) |

**Example 1: Synthesis of Pt Nanoparticles (NPs)**

All syntheses were performed using standard air-free Schlenk techniques. 0.20 mmol of platinum(II) acetylacetonate ($Pt(acac)_2$, 97%, Sigma-Aldrich) was combined with 10 mL trioctylamine (TOA, 97%, Acros Organics), 2.5 mL oleic acid (OLAC, 90%, Sigma-Aldrich), and 0.66 mL oleylamine (OLAM, 70%, Sigma-Aldrich) in a three-neck flask and placed under magnetic stirring. The mixture was evacuated at room temperature for 15 minutes, after which an appropriate amount (50 $\mu$L for 2 nm NPs and 220 $\mu$L for 5 nm NPs) of trioctylphosphine (TOP, 97%, Sigma-Aldrich) was added. The mixture was then evacuated for an additional 30 minutes at 120 °C to remove any low boiling point impurities. At this point, the reaction mixture was a translucent pale yellow solution. The reaction vessel was then flushed with nitrogen and heated quickly (~40 °C min$^{-1}$) to a high temperature (250 °C for 2 nm NPs, and 350 °C for 5 nm NPs). After 30 minutes of reaction at high temperature, the solution was cooled rapidly to room temperature. The particles were isolated by two rounds of precipitation using isopropanol, ethanol, acetone, and methanol as antisolvents and separated by centrifugation (8000 rpm, 3 minutes). The particles were then dispersed in hexanes.

**Example 2: Synthesis of Bimetallic Pt/M NPs**

$Pt_xM_{100-x}$ nanoparticles (NPs) with varying Pt/M ratios were synthesized using a seed-mediated alloying approach. In a three-neck flask, Pt seed (0.1 mmol Pt) dispersed in hexanes was combined with variable quantities of specific metal acetylacetonate precursors to achieve specific Pt/M ratios using two different Pt seed sizes **(Table 1)**. In Table 1, the recited material compositions ($Pt_xM_{100-x}$) were determined by ICP-OES.

OLAM (8 mL) was added to the flask, and the mixture was placed under magnetic stirring and evacuated at 70 °C for 30 minutes to remove hexanes and low-boiling point impurities. The reaction mixture was then flushed with nitrogen and heated quickly (~40 °C min$^{-1}$) to 280 °C. After 30 minutes of reaction at high temperature, the solution was cooled rapidly to room temperature. The particles were then isolated by two rounds of precipitation using toluene, isopropanol, and ethanol as antisolvents and separated by centrifugation (8000 rpm, 3 minutes). Finally, the particles were dispersed in hexanes. NPs were rapidly impregnated onto supports to prevent any leaching of base metal out of the NPs.

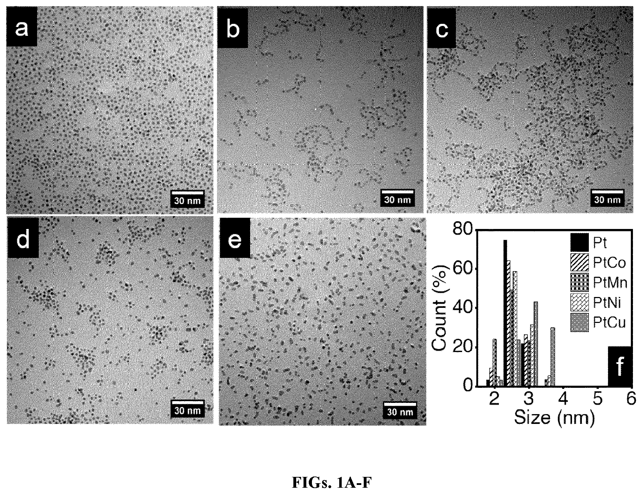

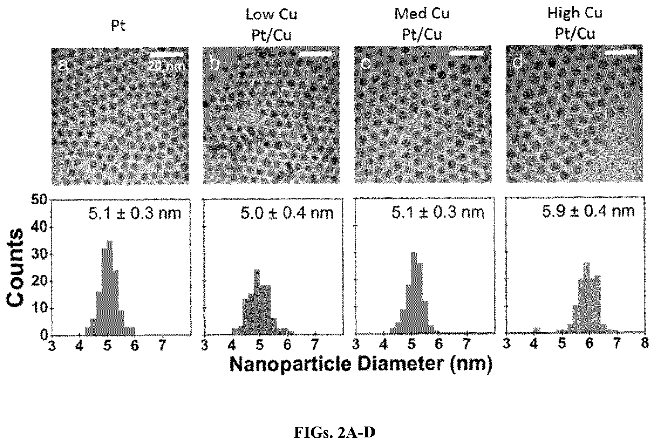

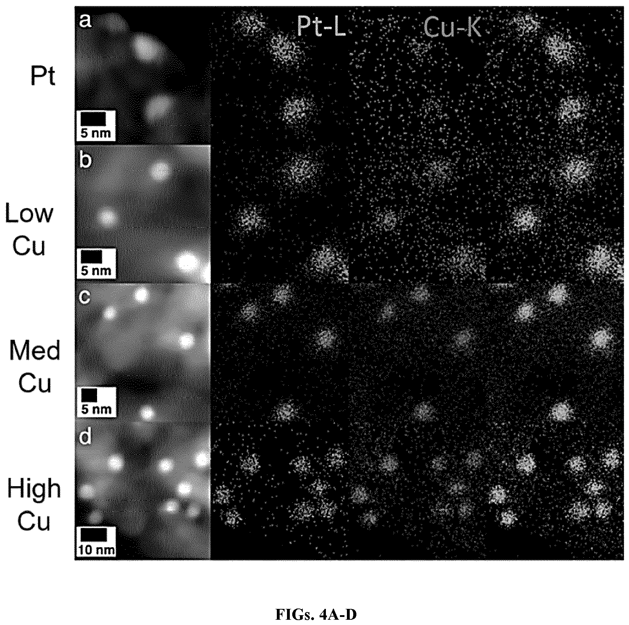

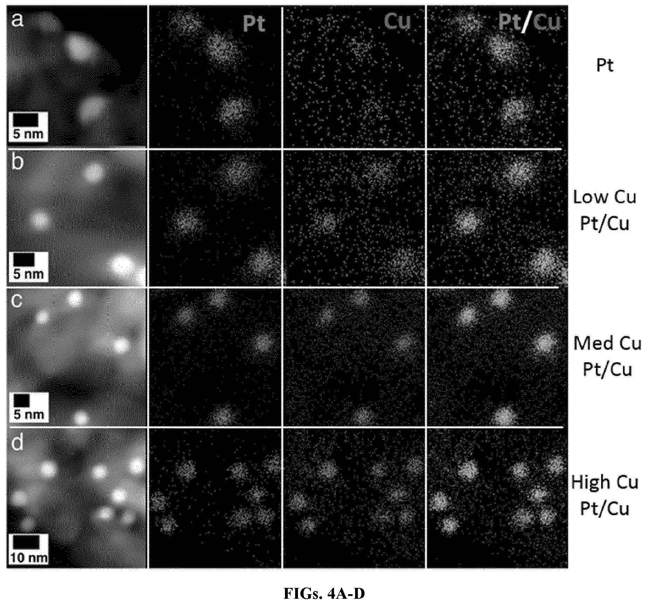

**FIGs. 1A-F**, **FIGs. 2A-D**, and **FIGs. 3A-H** depict representative TEM images and particle size distributions for NPs synthesized via this seed-mediated alloying approach. Representative XRD spectra for Pt and Pt/M NPs (2 nm) are also shown in **FIG. 4**. For Pt/M NPs synthesized using "2 nm" Pt seeds, the particle sizes observed were 2.6 ± 0.2 nm, 2.6 ± 0.3 nm, 2.5 ± 0.4 nm, 2.7 ± 0.3 nm, and 3.0 ± 0.4 nm for Pt, PtCo, PtMn, PtNi, and PtCu NPs, respectively **(FIG. 1F)**. Particle size slightly increased for Pt/M NPs relative to control Pt NPs due to the incorporation of a base metal element. Additionally, for Pt/M NPs synthesized using "5 nm" Pt seeds, the particle sizes observed were 5.1 ± 0.3 nm, 5.0 ± 0.4 nm , 5.1 ± 0.3 nm, and 5.9 ± 0.4 nm for Pt, $Pt_{86}Cu_{14}$ ("low Cu"), $Pt_{69}Cu_{31}$ ("Med Cu"), and $Pt_{44}Cu_{56}$ ("High Cu"), respectively **(FIGs. 2A-D)**.

**Table 1:** Synthetic Parameters for Pt/M Bimetallic NPs

| Pt seed size | Material | Pt:M in synthesis | M(acac)$_x$ information | M(acac)$_x$ used (mg) |
|---|---|---|---|---|
| 2 nm | $Pt_{67}Co_{33}$ | 3:1 | Co(acac)$_2$, 99%, Sigma-Aldrich | 9.1 |
| 2 nm | $Pt_{70}Mn_{30}$ | 3:1 | Mn(acac)$_3$, 97%, Sigma-Aldrich | 12.4 |

(continued)

| Pt seed size | Material | Pt:M in synthesis | M(acac)$_x$ information | M(acac)$_x$ used (mg) |
|---|---|---|---|---|
| 2 nm | Pt$_{64}$Ni$_{36}$ | 3:1 | Ni(acac)$_2$, 95%, Sigma-Aldrich | 9.1 |
| 2 nm | Pt$_{63}$Cu$_{37}$ | 3:1 | Cu(acac)$_2$, 97%, Sigma-Aldrich | 9.3 |
| 2 nm | Pt$_{49}$Cu$_{51}$ | 1:1 | Cu(acac)$_2$, 97%, Sigma-Aldrich | 18.5 |
| 2 nm | Pt$_{37}$Cu$_{63}$ | 1:3 | Cu(acac)$_2$, 97%, Sigma-Aldrich | 37 |
| 5 nm | Pt$_{86}$Cu$_{14}$ | 3:1 | Cu(acac)$_2$, 97%, Sigma-Aldrich | 9.3 |
| 5 nm | Pt$_{69}$Cu$_{31}$ | 1:1 | Cu(acac)$_2$, 97%, Sigma-Aldrich | 18.5 |
| 5 nm | Pt$_{44}$Cu$_{56}$ | 1:3 | Cu(acac)$_2$, 97%, Sigma-Aldrich | 37 |

**Example 3: Preparation of Supported Catalysts**

The metal concentration in the colloidal NP solutions was determined by thermogravimetric analysis (TGA). 300 μL of NP solution was drop-cast into an aluminum pan, and solvents were evaporated on a hot plate. The pan was transferred in a static air furnace and heated to 500 °C for 20 minutes to completely remove the ligands. Dividing the final mass of product by the initial solution volume provided the metal concentration. An appropriate amount of metal NPs to achieve 0.3 wt% was added to a dispersion of stirred supports in hexane. The mixture was left stirring overnight to ensure full adsorption of NPs onto the support material. The solid was then recovered by centrifugation (8000 rpm, 3 minutes). Final powders were dried at 80 °C overnight and sieved below 180 μm grain size. All samples were fast-treated at 700 °C for 30 seconds in a furnace to remove ligands from the colloidal synthesis following a routine procedure.

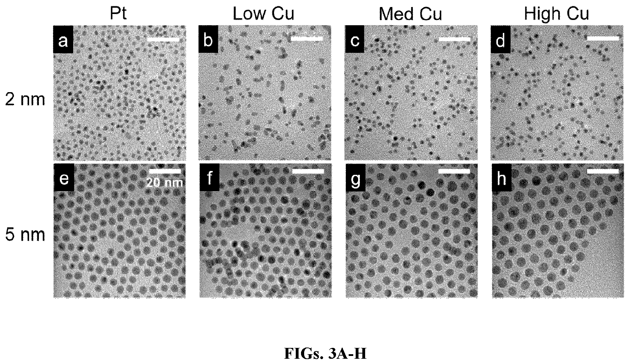

To evaluate the effects of Pt/Cu ratio, three different Pt/Cu ratios (3/1, 1/1, and 1/3) were used during synthesis. Additionally, to study the effect of NP size, two Pt NP sizes (2.6 nm ("2 nm") and 5.1 nm ("5 nm")) were employed as starting seeds. **FIGs. 3A-H** show representative TEM images of the resulting Pt/Cu NPs with different Pt/Cu ratios and sizes. The final sizes and shapes of Pt/Cu NPs were all close to that of the starting Pt seeds.

After the Pt/M NPs were deposited on a Al$_2$O$_3$ support, ICP-OES analysis and CO chemisorption were used to find the Pt/M ratios and exposed metallic surface areas **(Table 2)**. In Table 2, the material composition and total (Pt+M) wt% were determined using ICP-OES, while the exposed metal surface area was evaluated using Co chemisorption. The final Pt/M compositions were in close agreement with the Pt seed/M precursor ratio used in synthesis. Additionally, it was observed that as Cu content increased, the exposed metal area decreased, demonstrating that the surface was enriched by Cu as more Cu was present in the NPs.

**Table 2**: ICP-OES and CO Chemisorption Results

| Pt seed size | Material | Total (Pt+M) wt% | Exposed metal surface area (m$^2$/g$_{catalyst}$) |
|---|---|---|---|
| 2 nm | Pt$_{67}$Co$_{33}$/Al$_2$O$_3$ | 0.23 | 0.066 |
| 2 nm | Pt$_{70}$Mn$_{30}$/Al$_2$O$_3$ | 0.24 | 0.095 |
| 2 nm | Pt$_{64}$Ni$_{36}$/Al$_2$O$_3$ | 0.22 | 0.012 |
| 2 nm | Pt$_{63}$Cu$_{37}$/Al$_2$O$_3$ | 0.23 | 0.056 |
| 2 nm | Pt$_{49}$Cu$_{51}$/Al$_2$O$_3$ | 0.23 | 0.044 |
| 2 nm | Pt$_{37}$Cu$_{63}$/Al$_2$O$_3$ | 0.23 | 0.030 |
| 5 nm | Pt$_{86}$Cu$_{14}$/Al$_2$O$_3$ | 0.35 | 0.048 |
| 5 nm | Pt$_{69}$Cu$_{31}$/Al$_2$O$_3$ | 0.37 | 0.022 |
| 5 nm | Pt$_{44}$Cu$_{56}$/Al$_2$O$_3$ | 0.28 | - |

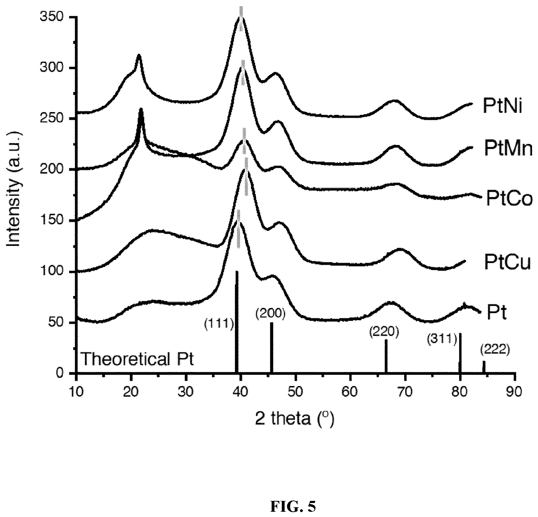

EDS mapping was used to determine the presence of Pt and Cu for the 5 nm Pt/Cu NPs supported on Al$_2$O$_3$ **(FIGs. 5A-D)**. No Cu signal was found on the monolithic Pt NPs **(FIG. 5A)**. For bimetallic Pt/Cu samples **(FIGs. 5B-D)**, the Pt and Cu signals uniformly overlapped with the bright spots on the HAADF-STEM images, demonstrating that Pt and Cu were present together in the NPs, and likely not on the support, de-alloyed, or phase-segregated. Additionally, the ratio of Pt/Cu signal intensity differed between the different Pt/Cu samples, corroborating the varied Pt/Cu compositions of the samples.

To determine the alloying extent of the synthesized Pt/M NPs, grazing incidence XRD spectra were measured on NPs that were drop-cast on microscope slides. From the shift of the FCC (111) peak on Pt, the degree of alloying was determined **(Table 3)**. In Table 3, (a) is used to note that the theoretical FCC lattice constant was calculated from the difference in atomic number between Cu/M and Ni/M.

**Table 3:** XRD Results of Pt/M NPs

| Materials | 2Θ of (111) peak (°) | Lattice constant from XRD (Å) | M structure | Theoretical FCC lattice constant (Å) | % of M |
|---|---|---|---|---|---|
| Pt | 39.45 | 3.953 | Pt: FCC | 3.924 | - |
| $Pt_{67}Co_{33}$ | 40.7 | 3.837 | Co: HCP | 3.433[a] | 18% |
| $Pt_{70}Mn_{30}$ | 40.2 | 3.882 | Mn: BCC | 3.251[a] | 6% |
| $Pt_{64}Ni_{36}$ | 39.9 | 3.910 | Ni: FCC | 3.524 | 3% |
| $Pt_{63}Cu_{37}$ | 40.95 | 3.814 | Cu: FCC | 3.615 | 36% |

Since Cu and Ni both possess FCC structures, the amount of Cu or Ni that was alloyed with Pt was determined using Vegard's law. For PtCu, 33 at% of Cu was calculated to alloy with Pt, which is consistent with the value determined by ICP-OES ($Pt_{63}Cu_{37}$). For PtNi, 4 at% of Ni was alloyed with Pt. Because the XRD patterns for PtCo and PtMn resembled the FCC lattice structure, the theoretical FCC lattice constants for Co and Mn were calculated using the difference in atomic number between Cu, Ni, and the target metal using Vegard's law **(Table 3).**

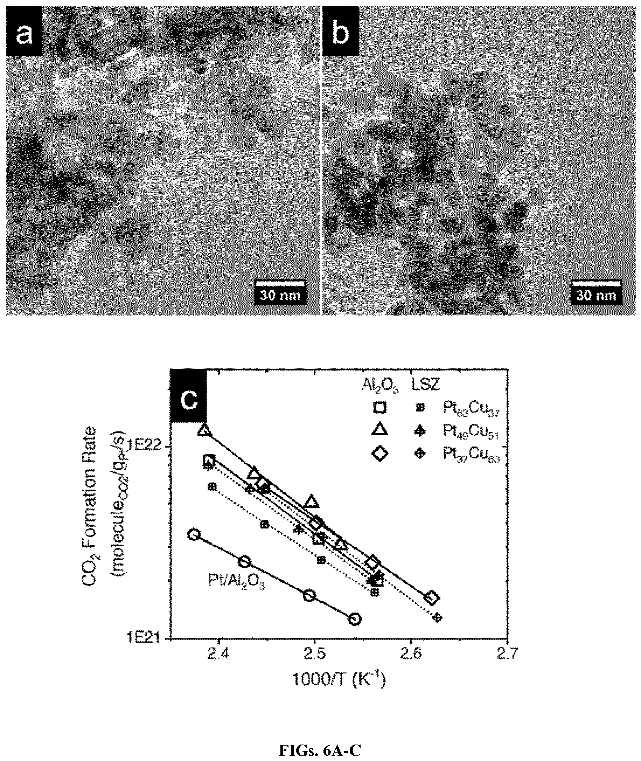

Another support, lanthanum-stabilized zirconia (LSZ), was also employed in the preparation of supported catalysts. Specifically, 2 nm Pt/Cu NPs were deposited on LSZ. Representative TEM images of the $Pt_{49}Cu_{51}$ NPs supported on $Al_2O_3$ and LSZ are shown in **FIGs. 6A,B.** For these samples, the post-deposition particle size on both supports was similar (2.5 $\pm$ 0.3 nm).

## Example 4: Catalytic Tests for $Al_2O_3$ Supported NPs

To avoid thermal and mass gradients in the catalytic bed, the following differential conditions were maintained for catalytic tests: Pt/M nanoparticles were diluted with $Al_2O_3$ powder (< 180 $\mu$m) and reactants were highly diluted (inert gas > 90%). Catalytic tests at different space velocities ensured that rates were obtained under strict kinetic control. For light-off curves, 8-40 mg of catalyst was diluted with alumina (calcined at 900 °C for 24 hours) to achieve a total 200 mg of powder for each test. The 200 mg catalyst was packed between acid-washed silica sand layers inside a quartz reactor tube with an internal diameter of 10 mm mounted inside a high-temperature furnace. The sample was pretreated at 300 °C under $O_2$ (5 vol. %)/Ar for 30 minutes. Catalysts were cooled under Ar to either 50 °C where the reaction mixture was introduced. The reaction mixture consisted of $C_3H_6$ (0.15 vol. %)/Ar, $O_2$ (3 vol. %)/Ar and $H_2O$ (10 vol. %)/Ar. Gas Hourly Space Velocity (GHSV) was held at 100,000 mL $g_{catalyst}^{-1}h^{-1}$, and the total flow rate was 50 mL min$^{-1}$. $H_2O$ was introduced by heating a water saturator to 47 °C and flowing Ar carrier through it. The catalyst was then heated to 300 °C at 10 °C min$^{-1}$ and cooled back down to room temperature in the reaction mixture. The gas composition was monitored using a mass spectroscopy (Hiden HPR20) following the parent molecular ions for $C_3H_6$ (41 amu), $C_3H_8$ (29 amu), $O_2$ (32 amu), $CO_2$ (44 amu), and $H_2O$ (18 amu).

For kinetic experiments, 10-40 mg of catalyst was diluted with alumina to achieve a total 200 mg of powder for each test. Kinetic measurements were conducted using the same pretreatment conditions described for light-off experiments. However, the final conversion was kept below 10% to ensure differential conditions. The reaction mixture was composed of $C_3H_6$ (0.15 vol. %)/Ar, $O_2$ (3 vol. %)/Ar and $H_2O$ (10 vol. %)/Ar. The kinetic measurements were collected above 100 °C to avoid liquid water condensation. The gas composition was measured by a gas chromatograph (Buck Scientific model 910) using flame ionization detector with a methanizer and thermal conductivity detector with Ar as the carrier gas.

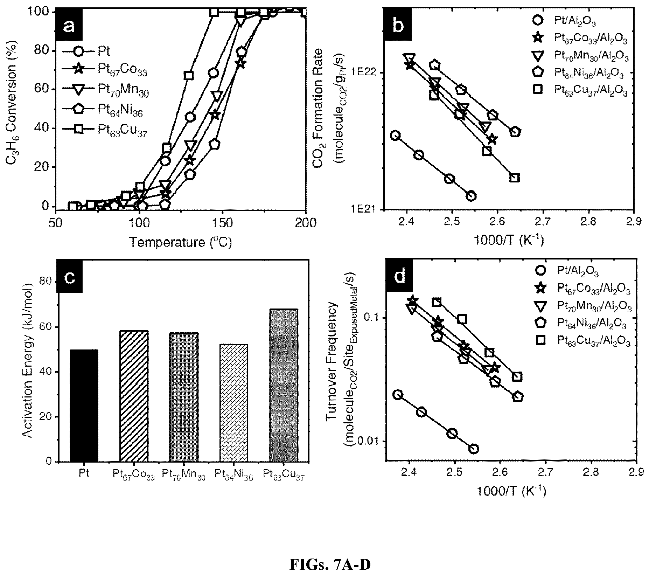

**FIGs. 7A-D** show the catalytic results of Pt/M NPs (2 nm) supported on $Al_2O_3$. In light-off measurements **(FIG. 7A),** the same amount of Pt was loaded for each test. In the kinetics measurements **(FIG. 7B),** all bimetallic Pt/M samples showed 2-3 times higher Pt mass normalized rates than pure Pt. Turnover frequencies **(FIG. 7D)** were calculated by normalizing the kinetics rates by the exposed available sites. The turnover frequencies of bimetallic Pt/M catalysts were 9-10 times higher than pure Pt samples.

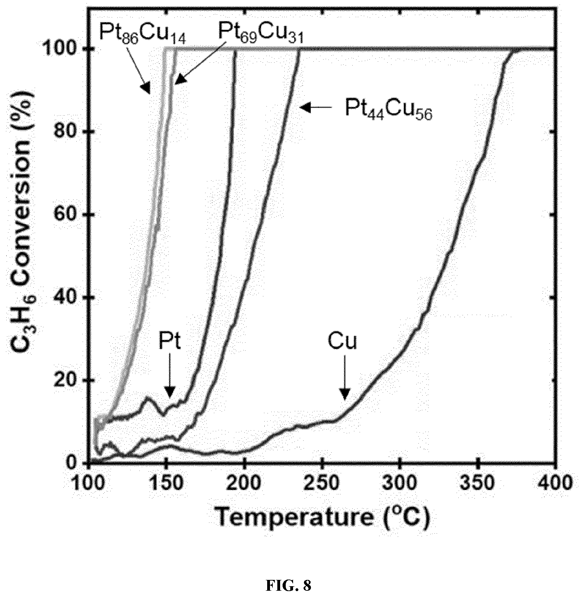

**FIG. 8** further shows propene conversion as a function of reaction temperature for PtCu catalysts as well as Pt and Cu reference samples (5 nm).

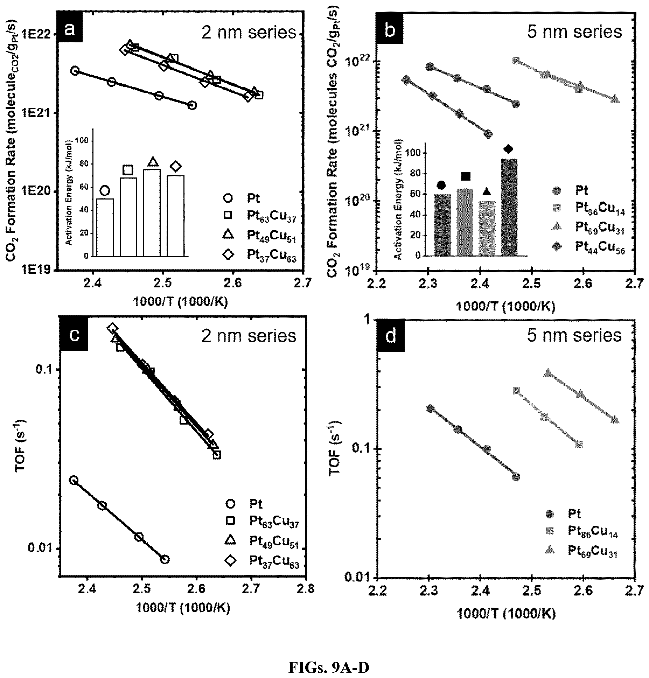

On a Pt-mass basis, all 2 nm Pt/Cu samples showed 2-fold higher $CO_2$ formation rates relative to pure 2 nm Pt sample **(FIG. 9A),** whereas the 5 nm $Pt_{86}Cu_{14}$ and $Pt_{69}Cu_{31}$ samples showed 4-fold higher rates relative to pure 5 nm Pt sample **(FIG. 9B).** Furthermore, normalization of kinetic measurements by the number of exposed surface sites (exposed Pt atoms) highlights additional differentiation of the activity trends **(FIGs. 9C,D).**

**FIG. 6C** compares the kinetics measurements results of 2 nm Pt/Cu samples ($Pt_{63}Cu_{37}$, $Pt_{49}Cu_{51}$, and $Pt_{37}Cu_{63}$) supported on $Al_2O_3$ or LSZ. The observed activities on LSZ were similar to those seen on $Al_2O_3$.

**Example 5: Pd-Based Bimetallic NPs**

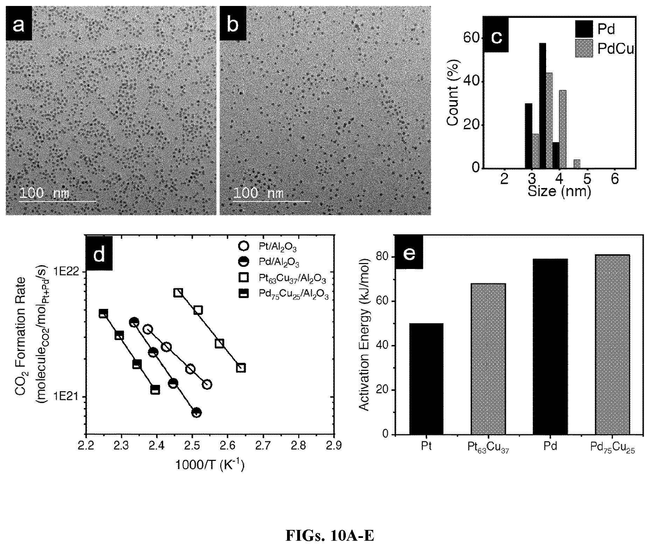

PdCu NPs with a Pd/Cu ratio of 3 were similarly synthesized using pre-formed uniform Pd seeds. The uniformity was maintained on PdCu NPs **(FIGs. 10A,B)**, and the sizes of Pd NPs (3.2 $\pm$ 0.3 nm) and PdCu NPs (3.4 $\pm$ 0.4 nm) were similar **(FIG. 10C)**. 0.3 wt% of PdCu NPs were then deposited on $Al_2O_3$ supports. The ratio of Pd/Cu was found to be 3.0 by ICP-OES. Although the activation energy of $Pd_{75}Cu_{25}/Al_2O_3$ was similar to $Pd/Al_2O_3$ **(FIG. 10E)** $Pd_{75}Cu_{25}/Al_2O_3$ was found to be less active than $Pd/Al_2O_3$ in kinetics measurements **(FIG. 10D)**.

**Claims**

1.  A nanoparticle comprising a platinum group metal (PGM) and a base metal (BM), wherein:

    a molar percentage of the PGM is in the range of 25% to 95%, based on a total number of moles of the PGM and the BM;
    the nanoparticle comprises an alloy of the PGM and the BM; and
    the nanoparticle has a particle size in the range of 1 nm to 4 nm.

2.  The nanoparticle of claim 1, wherein the molar percentage of the PGM is in the range of 25% to 75%.

3.  The nanoparticle of claim 1 or 2, wherein the particle size is in the range of 2.5 nm to 3.5 nm.

4.  A nanoparticle comprising a platinum group metal (PGM) and a base metal (BM), wherein:

    a molar percentage of the PGM is in the range of 50% to 95%, based on a total number of moles of the PGM and the BM;
    the nanoparticle comprises an alloy of the PGM and the BM; and
    the nanoparticle has a particle size in the range of 4 nm to 7 nm.

5.  The nanoparticle of claim 4, wherein the molar percentage of the PGM is in the range of 65% to 90%.

6.  The nanoparticle of claim 4 or 5, wherein the particle size is in the range of 4 nm to 6 nm.

7.  The nanoparticle of any one of claims 1-6, wherein the PGM is Pt.

8.  The nanoparticle of any one of claims 1-7, wherein the BM is Cu.

9.  The nanoparticle of any one of claims 1-8, wherein the alloy comprises at least 15 at% of the BM.

10. A catalytic composition comprising:

    a nanoparticle of any one of claims 1-9; and
    a support material.

11. The catalytic composition of claim 10, wherein the support material is $Al_2O_3$ or lanthanum-stabilized zirconia.

12. A catalytic article comprising:

    a substrate having an inlet end and an outlet end defining an overall length; and
    a catalytic coating comprising a washcoat disposed on a portion of the overall length of the substrate, wherein the washcoat comprises a catalyst composition of claim 10 or 11.

13. An exhaust gas treatment system comprising a catalytic article of claim 12, wherein the catalytic article is downstream of and in fluid communication with an internal combustion engine.

14. A method of treating an exhaust gas stream comprising a pollutant, the method comprising passing the exhaust gas stream through a catalytic article of claim 12, or an exhaust gas treatment system of claim 13.

15. The method of claim 14, wherein the exhaust gas stream is passed through the catalytic article or the exhaust gas treatment system at a temperature in the range of 100°C to 150°C.

**FIGs. 1A-F**

FIGs. 2A-D

24

FIGs. 3A-H

**FIGs. 4A-D**

**FIGs. 4A-D**

**FIG. 5**

FIGs. 6A-C

**FIGs. 7A-D**

**FIG. 8**

**FIGs. 9A-D**

FIGs. 10A-E

Europäisches
Patentamt

European
Patent Office

Office européen
des brevets

# EUROPEAN SEARCH REPORT

Application Number

EP 21 16 8990

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/094199 A1 (SCHWAB EKKEHARD [DE] ET AL) 19 April 2012 (2012-04-19) * paragraph [0062]; example 1 * ----- | 1-4,6,7, 9,10 | INV. B01J21/04 B01J21/06 B01J23/89 |
| X | FAN YANG ET AL: "Three-dimensional hierarchical porous platinum-copper alloy networks with enhanced catalytic activity towards methanol and ethanol electro-oxida", JOURNAL OF POWER SOURCES, ELSEVIER SA, CH, vol. 296, 29 July 2015 (2015-07-29), pages 282-289, XP029259486, ISSN: 0378-7753, DOI: 10.1016/J.JPOWSOUR.2015.07.078 * 3. Results and discussion; page 286, right-hand column * * 3. Results and discussion; page 287, right-hand column * ----- | 1-6,8,9 | B01J23/656 B01J35/00 B01J35/04 B01J35/02 B01J37/02 B01J37/03 B01D53/94 |
| X | EP 3 207 991 A1 (KOREA ENERGY RESEARCH INST [KR]) 23 August 2017 (2017-08-23) * paragraph [0226] * ----- | 1,2,7,9, 10 | |
| X | US 5 977 012 A (KHARAS KARL C C [US] ET AL) 2 November 1999 (1999-11-02) * example 5 * ----- | 1-15 | TECHNICAL FIELDS SEARCHED (IPC) B01J B01D |
| A | WO 2011/017139 A2 (BASF CORP [US]; SIANI ATTILIO [DE] ET AL.) 10 February 2011 (2011-02-10) * the whole document * ----- | 1-15 | |
| A | US 2016/288102 A1 (STAMENKOVIC VOJISLAV [US] ET AL) 6 October 2016 (2016-10-06) * the whole document * ----- | 1-15 | |

The present search report has been drawn up for all claims

| Place of search | Date of completion of the search | Examiner |
|---|---|---|
| Munich | 30 September 2021 | Zieba, Roman |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 16 8990

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-2021

| Patent document cited in search report | | Publication date | Patent family member(s) | | Publication date |
|---|---|---|---|---|---|
| US 2012094199 | A1 | 19-04-2012 | CN | 102458653 A | 16-05-2012 |
| | | | EP | 2437883 A2 | 11-04-2012 |
| | | | JP | 2012529135 A | 15-11-2012 |
| | | | KR | 20120024889 A | 14-03-2012 |
| | | | US | 2012094199 A1 | 19-04-2012 |
| | | | WO | 2010139596 A2 | 09-12-2010 |
| EP 3207991 | A1 | 23-08-2017 | EP | 3207991 A1 | 23-08-2017 |
| | | | JP | 6933906 B2 | 08-09-2021 |
| | | | JP | 2017170428 A | 28-09-2017 |
| | | | KR | 20170097579 A | 28-08-2017 |
| | | | KR | 20190065997 A | 12-06-2019 |
| US 5977012 | A | 02-11-1999 | DE | 69517687 T2 | 28-12-2000 |
| | | | EP | 0762926 A1 | 19-03-1997 |
| | | | JP | H10501172 A | 03-02-1998 |
| | | | US | 5977012 A | 02-11-1999 |
| | | | WO | 9532790 A1 | 07-12-1995 |
| WO 2011017139 | A2 | 10-02-2011 | BR | 112012002614 B1 | 26-02-2019 |
| | | | CN | 102574106 A | 11-07-2012 |
| | | | CN | 105944715 A | 21-09-2016 |
| | | | EP | 2461905 A2 | 13-06-2012 |
| | | | ES | 2641241 T3 | 08-11-2017 |
| | | | JP | 6259186 B2 | 10-01-2018 |
| | | | JP | 6632559 B2 | 22-01-2020 |
| | | | JP | 2013500862 A | 10-01-2013 |
| | | | JP | 2017159296 A | 14-09-2017 |
| | | | KR | 20120040732 A | 27-04-2012 |
| | | | KR | 20180019244 A | 23-02-2018 |
| | | | PL | 2461905 T3 | 29-12-2017 |
| | | | US | 2011033353 A1 | 10-02-2011 |
| | | | US | 2014044627 A1 | 13-02-2014 |
| | | | WO | 2011017139 A2 | 10-02-2011 |
| US 2016288102 | A1 | 06-10-2016 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016070090 A